# EUROPEAN PATENT APPLICATION

(11) **EP 4 557 563 A1**
(43) Date of publication of application: **21.05.2025**
(21) Application number: 23901171.1
(22) Date of filing: 08.12.2023
(51) Int. Cl.: H02J 7/00

(54) **BATTERY MANAGEMENT SYSTEM BASED ON WIRELESS MESH NETWORK, AND OPERATING METHOD THEREOF**

(30) Priority: 09.12.2022 KR 20220171351
(71) Applicant: LG Energy Solution, Ltd., Seoul 07335 (KR)
(72) Inventor: YANG, Seong-Yeol, Daejeon 34122 (KR); LEE, Ye-Seul, Daejeon 34122 (KR); KIM, Duk-You, Daejeon 34122 (KR); LEE, Keun-Wook, Daejeon 34122 (KR)
(74) Representative: Plasseraud IP
(86) International application number: PCT/KR2023/020266
(87) International publication number: WO 2024/123154

(57) **Abstract**

Disclosed is a battery management system based on a wireless network and its operating method. The battery management system includes first to N^{th} BMUs (Battery Management Unit) and a master BMU that constitute a wireless mesh network. The master BMU is configured to determine network performance of the first to N^{th} BMUs, determine SOCs using the operation characteristic data received from the first to N^{th} BMUs, and designate a BMU coupled with a battery module having network performance above the standard and having a SOC satisfying a balancing condition as a router BMU and designate the remaining BMUs as end BMUs. The router BMU is configured to form a communication link with each end BMU, and transmit the operation characteristic data of the battery module collected from each end BMU and the operation characteristic data of the battery module coupled therewith to the master BMU.

## Description

### TECHNICAL FIELD

The present disclosure relates to a battery management system and an operating method thereof, and more specifically, to a battery management system based on a wireless network to which mesh topology is applied, in which SOC balancing between battery modules and designation of router nodes and end nodes are interrelated each other, and an operating method thereof.

The present application claims priority to Korean Patent Application No. 10-2022-0171351 filed on December 9, 2022 in the Republic of Korea, the disclosures of which are incorporated herein by reference.

### BACKGROUND ART

A battery pack included in various battery applications such as an electric vehicle or an energy storage system (ESS) includes a plurality of battery modules and a battery management system (BMS).

The battery module includes a plurality of battery cells and a battery management unit (BMU). Within the battery module, a plurality of battery cells are connected in series and/or parallel depending on the desired output voltage and capacity of the battery module. Similarly, within the battery pack, a plurality of battery modules are connected in series and/or parallel depending on the desired output voltage and capacity of the battery pack.

The BMS of the battery pack is configured as a combination of a master BMU and slave BMUs connected to each battery module. The conventional BMS is mainly a wired network-based BMS such as CAN (Controller Area Network) where the master BMU and plurality of slave BMUs are connected to each other through communication wires.

The slave BMU uses sensors installed in the battery module to generate measurement data about voltage, temperature, and current of the battery module and operation characteristic data including SOC and store them in a memory device. The master BMU periodically collects the operation characteristic data of the battery module from each slave BMU through a wired network and stores it in a memory device. In addition, the master BMU monitors the operation stats of each battery module based on operation characteristic data, generates command messages necessary to control the operation of the battery module, and transmits them to the slave BMU through a wired network.

The conventional BMS architecture based on a wired network requires a lot of cost to build a wired network due to the complexity of the wire harness. Also, the aging of communication lines and the connection quality of connectors also affect communication. **In** particular, in large-capacity energy storage systems, the wired network-based BMS architecture may cause more serious cost and communication quality problems.

Recently, a wireless network based battery management system (abbreviated as WBMS) has been developed. The WBMS is an improved system built using a master BMU and slave BMUs that support wireless communication.

The WBMS does not require communication lines, so network construction costs are low, scalability is good, and maintenance is easy. Also, the WBMS increases the space utilization inside the battery pack, thereby increasing the energy density of the battery pack. Also, there is no problem of deterioration in communication quality due to aging of communication lines.

When a WBMS is built, mesh topology may be applied. Mesh topology has the advantage of reducing the shadow area of wireless communication.

In the WBMS to which mesh topology is applied, a communication path that may guarantee maximum performance of the wireless network is selected. Protocols for communication path selection within a mesh topology are well known in the art.

To select a communication path, the master BMU monitors the network performance of all slave BMUs. Also, the master BMU designates one of the slave BMUs with good network performance as a router node, and designates the remaining slave BMUs as end nodes.

Hereinafter, for convenience of explanation, among the slave BMUs, the BMU designated as a router node will be named a router BMU, and the BMU designated as an end node will be named an end BMU.

The router BMU is responsible for relaying communications on the wireless network. In other words, the end BMU does not communicate directly with the master BMU, but exchanges data with the master BMU through the router BMU. Therefore, the power consumption of the router BMU is relatively higher than that of the end BMU.

The router BMU and the end BMU receive the operating power from a battery module to which they are connected. Therefore, the energy of the battery module coupled with the router BMU has a relatively faster SOC (State Of Charge) reduction rate compared to other battery modules coupled with the end BMUs.

The SOC of the battery module must be managed within an appropriate range. Therefore, if the SOC of the battery module to which the router BMU belongs is outside an appropriate range, the router BMU needs to be changed at an appropriate time.

The reduction in SOC may result from the power consumption of the router BMU or problems with the battery module itself, such as current leakage.

Meanwhile, the master BMU may be designed to switch to a sleep mode in order to reduce power usage if a load device (system) that receives power from the battery pack stops being used.

For example, if an electric vehicle comes into a key-off state after stopping operating, the master BMU switches to a sleep mode. Even after the master BMU switches to the sleep mode, the router BMU and the end BMU periodically communicate with each other. In other words, the end BMU periodically generates the operation characteristic data of the battery module and transmits it to the router BMU. Therefore, the router BMU continuously collects the operation characteristic data of battery modules even while the master BMU is in the sleep state.

Meanwhile, the network performance of the router BMU may fall below a threshold value for some reason. For example, if severe noise is introduced around the router BMU or the SOC of the battery module coupled with the router BMU is lowered below a threshold so as not to supply a stable power to the router BMU, the network performance of the router BMU may deteriorate. In this case, the router BMU cannot perform its role properly, so communication between the router BMU and the master BMU cannot be performed smoothly. However, it is not easy to change the router BMU while the master BMU, which is responsible for designating the router node and the end node, is in a sleep state.

### DISCLOSURE

### Technical Problem

The present disclosure is designed to solve the problems of the related art, and therefore the present disclosure is directed to interrelating SOC balancing between battery modules and selection of a network communication path in a battery management system based on a wireless mesh network to which mesh topology is applied.

The present disclosure is also directed to providing a battery management system, which may temporarily designate a router BMU without the intervention of a master BMU when a SOC of a battery module coupled with the router BMU is lowered to a level where balancing is unnecessary after the master BMU of the battery management system based on a wireless mesh network is switched to a sleep mode, and an operating method thereof.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a battery management system based on a wireless mesh network, comprising first to N^{th} BMUs (Battery Management Unit) and a master BMU that constitute a wireless mesh network.

Each of the first to N^{th} BMUs and the master BMU may include a communication interface for supporting wireless communication through the wireless mesh network and a storage medium capable of storing data.

The first to N^{th} BMUs may be correspondingly coupled with first to N^{th} battery modules and record operation characteristic data including a SOC (State Of Charge) of a battery module managed thereby in the storage medium.

The master BMU may be configured to: form a communication link with the first to N^{th} BMUs, determine network performance of the first to N^{th} BMUs, determine SOCs of the first to N^{th} battery modules by receiving the operation characteristic data from the first to N^{th} BMUs, and designate a BMU coupled with a battery module having network performance above the standard and having a SOC satisfying a balancing condition as a router BMU and designate the remaining BMUs as end BMUs among the first to N^{th} BMUs,

The router BMU may be configured to: form a communication link with each end BMU, and collect the operation characteristic data of the battery module from each end BMU and transmit the collected operation characteristic data and the operation characteristic data of the battery module coupled with the router BMU to the master BMU.

A SOC reduction rate of the battery module coupled with the router BMU may be faster than a SOC reduction rate of the battery module coupled with each end BMU.

The network performance may be a received signal strength indicator (RSSI) or a bit error rate (BER).

The master BMU may be configured to designate a BMU coupled to a battery module with a highest SOC among the BMUs having network performance above the standard as a router BMU.

The router BMU and each end BMU may operate in a wake-up mode and a sleep mode in an alternate manner, and a maintenance time of the wake-up mode of the router BMU may be relatively longer than a maintenance time of the wake-up mode of each end BMU.

Each end BMU may be configured to generate operation characteristic data of the battery module connected with the corresponding end BMU when operating in the wake-up mode. Also, the router BMU may be configured to form a communication link with an end BMU operating in the wake-up mode while operating in the wake-up mode, and collect the operation characteristic data of the battery module from each end BMU at which the communication link is formed.

The router BMU may be configured to transmit the operation characteristic data collected from each end BMU and the operation characteristic data of the battery module coupled with the router BMU to the master BMU when the master BMU is operating in a wake-up mode.

The router BMU may be configured to hold the transmission of the operation characteristic data collected from each end BMU to the master BMU when the master BMU switches to a sleep mode to release a communication link with the router BMU, additionally collect operation characteristic data from each end BMU, and maintain the additionally collected operation characteristic data in the storage medium.

The router BMU may be configured to transmit the collected operation characteristic data and the operation characteristic data of the battery module coupled with the router BMU to the master BMU when the master BMU switches from the sleep mode to a wake-up mode to reestablish a communication link.

The router BMU may be configured to: determine network performance by forming a communication link with the remaining end BMUs when the SOC of the battery module coupled with the router BMU does not satisfy the balancing condition, while the master BMU switches to a sleep mode to release the communication link with the router BMU, and temporarily designate an end BMU coupled with a battery module having network performance above the standard and having a SOC satisfying the balancing condition as a router BMU among the remaining end BMUs.

The router BMU may be configured to determine that the balancing condition is not satisfied when the SOC of the battery module coupled with the router BMU is less than at least one of the SOCs of the battery modules coupled with the end BMUs.

The temporarily designated router BMU may be configured to form a communication link with an end BMU operating in a wake-up mode while the master BMU is in the sleep mode, collect operation characteristic data of the battery module from the end BMU at which the communication link is formed, and store the collected operation characteristic data in the storage medium.

The temporarily designated router BMU may be configured to: form a communication link with the master BMU when the master BMU switches from the sleep mode to the wake-up mode, and transmit the operation characteristic data of the battery module collected from each end BMU and the operation characteristic data of the battery module coupled with the temporarily designated router BMU to the master BMU.

In another aspect of the present disclosure, there is also provided a method of operating a battery management system based on a wireless mesh network, comprising: (a) allowing first to N^{th} BMUs correspondingly coupled with first to N^{th} battery modules and a master BMU to constitute a wireless mesh network; (b) by each of the first to N^{th} BMUs, generating and storing characteristic data including a SOC of a battery module managed thereby; (c) by the master BMU, forming a communication link with the first to N^{th} BMUs; (d) by the master BMU, determining network performance of the first to N^{th} BMUs; (e) by the master BMU, determining SOCs of the first to N^{th} battery modules by receiving the operation characteristic data from the first to N^{th} BMUs; (f) by the master BMU, designating a BMU coupled with a battery module having network performance above the standard and having a SOC satisfying a balancing condition as a router BMU and designating the remaining BMUs as end BMUs among the first to N^{th} BMUs; (g) by the router BMU, forming a communication link with each end BMU; (h) by the router BMU, collecting the operation characteristic data of the battery module from each end BMU and transmitting the collected operation characteristic data and the operation characteristic data of the battery module coupled with the router BMU to the master BMU; and (i) by the master BMU, maintaining the designation of the router BMU until the SOC of the battery module to which the router BMU belongs satisfies a balancing stop condition.

The (h) step may include switching an operation state of the router BMU to the wake-up mode; and by the router BMU, forming a communication link with an end BMU operating in the wake-up mode, collecting the operation characteristic data of the battery module from each end BMU at which the communication link is formed, and transmitting the collected operation characteristic data and the operation characteristic data of the battery module coupled with the router BMU to the master BMU.

The method of operating a battery management system based on a wireless mesh network according to the present disclosure may further comprise: by the router BMU, forming a communication link with the remaining end BMUs and determining network performance when the SOC of the battery module coupled with the router BMU satisfies a balancing stop condition while the master BMU switches to a sleep mode and release the communication link with the router BMU; and by the router BMU, temporarily designating an end BMU coupled with a battery module having network performance above the standard and having SOC satisfying the balancing condition as a router BMU among the remaining end BMUs.

The method of operating a battery management system based on a wireless mesh network according to the present disclosure may further comprise: by the temporarily designated router BMU, forming a communication link with an end BMU operating in a wake-up mode while operating in a wake-up mode, and collecting operation characteristic data of the battery module from the end BMU at which the communication link is formed; and by the temporarily designated router BMU, forming a communication link with the master BMU when the master BMU switches from the sleep mode to the wake-up mode, and transmitting the operation characteristic data collected from each end BMU and the operation characteristic data of the battery module coupled with the temporarily designated router BMU to the master BMU.

### Advantageous Effects

According to the present disclosure, a battery module coupled with a BMU with network performance above the standard and having a SOC satisfying the balancing condition is identified, the BMU coupled with the identified battery module is designated as a router BMU, and the remaining BMUs are designated as end BMUs. Therefore, the router BMU consumes the energy of the battery module in the process of collecting the operation characteristic data of the battery module from the end BMUs through wireless communication and transmitting it to the master BMU, so the SOC of the battery modules may be balanced without unnecessary waste of energy.

Also, while the master BMU is in a sleep mode, if the SOC of the battery module coupled with the router BMU satisfies the balancing stop condition, since the router BMU is temporarily designated among other BMUs, the balancing of the SOC may be performed reliably without interruption regardless of the operation mode of the master BMU.

The effects of the present disclosure are not limited to the above-mentioned effects, and these and other effects not mentioned herein will be clearly understood by those skilled in the art from the appended claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a block diagram exemplarily showing a battery management system based on a wireless mesh network according to an embodiment of the present disclosure.
FIG. 2 is a block diagram schematically showing a k^{th} BMU (Cₖ) coupled to a k^{th} battery module (Bₖ) according to an embodiment of the present disclosure.
FIG. 3 is a diagram showing a router BMU (C*_{R}) and end BMUs (C_{E1} to C_{E(N-1)}) operating in a wake-up mode and a sleep mode in an alternating manner according to an embodiment of the present disclosure.
FIG. 4 exemplarily shows SOCs of battery modules (B₁ to B₆) and the network performance of BMUs (C₁ to C₆) at one time point while the battery pack BP is being discharged according to an embodiment of the present disclosure.
FIG. 5 exemplarily shows SOCs of the battery modules (B₁ to B₆) and the network performance of the BMUs (C₁ to C₆) at another time point while the battery pack BP is being discharged according to an embodiment of the present disclosure.
FIG. 6 exemplarily shows SOCs of the battery modules (B₁ to B₆) and the network performance of the BMUs (C₁ to C₆) at still another time point while the battery pack BP is being discharged according to an embodiment of the present disclosure.
FIG. 7 exemplarily shows SOCs of the battery modules (B₁ to B₆) and the network performance of the BMUs (C₁ to C₆) at still another time point while the battery pack BP is being discharged according to an embodiment of the present disclosure.
FIG. 8 exemplarily shows SOCs of the battery modules (B₁ to B₆) and the network performance of the BMUs (C₁ to C₆) at still another time point while the battery pack BP is being discharged according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

The terms including the ordinal number such as "first", "second" and the like, are used to distinguish one element from another among various elements, but not intended to limit the elements by the terms.

Throughout the specification, it will be further understood that when an element is referred to as being "connected to" another element, it can be directly connected to the other element or intervening elements may be present.

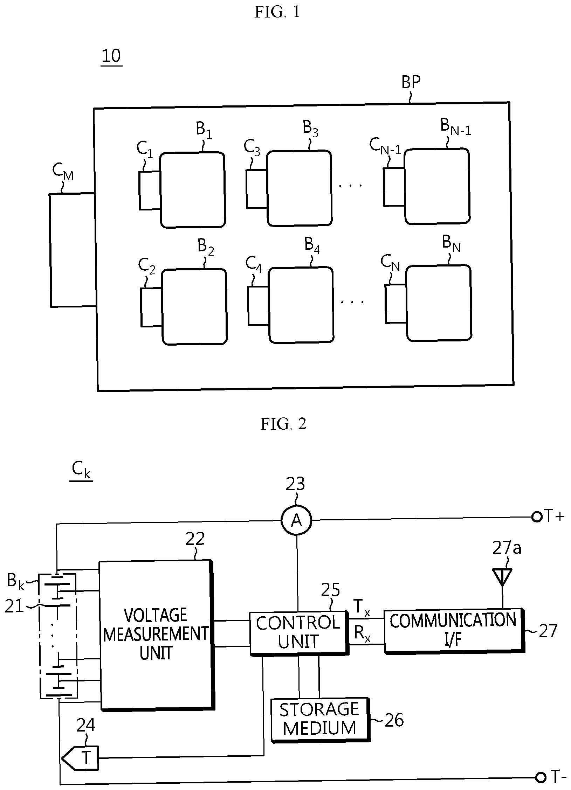

FIG. 1 is a block diagram exemplarily showing a battery management system 10 based on a wireless mesh network according to an embodiment of the present disclosure.

Referring to FIG. 1, the battery management system 10 is operably coupled to a battery pack BP including first to N^{th} battery modules (B₁ to B_{N}) electrically connected in series and/or parallel.

In one aspect, the battery pack BP may be mounted on a vehicle. The vehicle may include a motor driven using electrical energy provided by the battery pack BP. The vehicle may be an electric vehicle, a plug-in hybrid vehicle, or a hybrid vehicle. The vehicle may have two, three or four wheels.

In another aspect, the battery pack BP may be included in an energy storage system (ESS).

In still another aspect, the battery pack BP may be included into any device or system known in the art that operates by electrical energy.

The battery management system 10 may include a master BMU (Battery Management Unit, C_{M}) and first to N^{th} BMUs (C₁ to C_{N}) correspondingly coupled to the first to N^{th} battery modules (B₁ to B_{N}), respectively, in an operation manner.

Preferably, the master BMU (C_{M}) and the first to N^{th} BMUs (C₁ to C_{N}) may constitute a wireless mesh network.

The wireless mesh network has a topology in which wireless nodes that constitute the network are connected to each other like a mesh network. Communication technologies used in the wireless mesh network are well known in the art. Nodes in the wireless mesh network may self-configure the network and select the best packet transmission path through ad-hoc characteristics that may render mesh connections between them automatically established and managed. Every node may act as a router, and intermediate nodes may transmit packets for other nodes. The mesh-type connections between the nodes increase the reliability of the transmission path.

The master BMU (C_{M}) may broadcast packets to scan for nearby nodes that may communicate, form a communication link with nodes that transmit response packets, and then exchange data packets. The node forming a communication link with the master BMU (C_{M}) may be at least one of the first to N^{th} BMUs (C₁ to C_{N}). The data packet may include operation characteristic data of the battery module. The operation characteristic data may include at least the SOC (State Of Charge) of the battery module. Optionally, the operation characteristic data may further include measurement data for at least one of voltage, current, and temperature of the battery module.

Each of the first to N^{th} BMUs C₁ to C_{N} may be correspondingly coupled to the first to N^{th} battery modules (B₁ to B_{N}), monitor the voltage, current, and temperature of the battery module coupled thereto using a sensor, estimate the SOC of the battery module based on the measurement data about voltage, current, and temperature, and adaptively control the charging and discharging of the battery module based on the operation characteristic data.

FIG. 2 is a block diagram schematically showing a k^{th} BMU (Cₖ) coupled to a k^{th} battery module (Bₖ). The configuration of the k^{th} BMU (Cₖ) shown in FIG. 2 may be commonly applied to the first to N^{th} BMU (C₁ to C_{N}).

Referring to FIG. 2, the k^{th} BMU (Cₖ) is operably coupled to a battery module (Bₖ) including a plurality of battery cells 21, and receives an operating power from the battery module (Bₖ).

The plurality of battery cells 21 may be electrically connected in series. In another example, the plurality of battery cells 21 may be connected in parallel in groups to form a plurality of banks, and the plurality of banks may be connected in series. However, the present disclosure is not limited to the electrical connection between the plurality of battery cells 21.

There are no particular restrictions on the type of the battery cell 21 as long as it is a secondary battery capable of repeated charging and discharging. In one example, the battery cell 21 may be a lithium secondary battery.

In one embodiment, the k^{th} BMU (Cₖ) may include a voltage measurement unit 22, a current measurement unit 23, a temperature measurement unit 24, a control unit 25, a storage medium 26, and a communication interface 27.

The voltage measurement unit 22 is connected to the positive electrode and the negative electrode of each of the plurality of battery cells 21 through a plurality of voltage sensing lines. The voltage measurement unit 22 is configured to measure the voltage at both ends of each battery cell 21 at regular time intervals under the control of the control unit 25 and generate a voltage signal representing the measured voltage. The voltage measurement unit 22 may include a conventional voltage measurement circuit known in the art. The voltage measurement circuit may include a multiplexer that may sequentially select battery cells that are subject to voltage measurement at time intervals, a filter that removes noise from the voltage measurement signal, and an amplifier that amplifies the voltage measurement signal.

The current measurement unit 23 is connected in series with the battery module (Bₖ) through the current path. The current measurement unit 23 is configured to detect the current flowing through the battery module (Bₖ) at regular time intervals under the control of the control unit 25 and generate a current signal indicating the magnitude of the detected current. The current measurement unit 23 may include a current measurement element. The current measurement element may be a conventional sensor known in the art, such as a sense resistor or a Hall sensor. The current flowing through the battery module (Bₖ) may be a charging current or a discharging current.

The temperature measurement unit 24 is configured to detect the temperature of the battery module (Bₖ) at regular time intervals under the control of the control unit 25 and generate a temperature signal indicating the detected temperature. The temperature measurement unit 24 may include a temperature measurement element. The temperature measurement element may be a conventional sensor known in the art, such as a thermocouple. The temperature measurement unit 24 may be installed at multiple points to independently measure the temperature of each battery cell 21.

The control unit 25 may be a control circuit that controls the overall operation of the k^{th} BMU (Cₖ). The control unit 25 may be implemented in hardware using at least one of application specific integrated circuits (ASICs), digital signal processors (DSPs), digital signal processing devices (DSPDs), programmable logic devices (PLDs), field programmable gate arrays (FPGAs), microprocessors or electrical units for performing the other functions.

The storage medium 26 may store data and programs required for calculation operations by the control unit 25. The storage medium 26 may cumulatively store data representing the results of calculation operations by the control unit 25 along with a time stamp. The data may include measurement data including at least one of the voltage, current, and temperature of the battery module and the SOC of the battery module.

The storage medium 26 may have a memory device. The storage medium 26 may be, for example, at least one type of storage medium among flash memory type, hard disk type, Solid State Disk (SSD) type, Silicon Disk Drive (SDD) type, multimedia card micro type, random access memory (RAM), static random access memory (SRAM), read-only memory (ROM), electrically erasable programmable read-only memory (EEPROM) or programmable read-only memory (PROM).

The communication interface 27 may be a communication circuit capable of supporting a communication protocol used in a wireless mesh network. The communication interface 27 may include an antenna 27a to support wireless communication.

In the present disclosure, the communication protocol may be a short-range wireless communication protocol supporting WI-FI, ZigBee, or Bluetooth communication. As a communication protocol, any communication protocol known in the art that can be used in a wireless mesh network may be adopted without limitation.

The control unit 25 may be operably coupled to the voltage measurement unit 22, the current measurement unit 23, the temperature measurement unit 24, the storage medium 26, and the communication interface 27.

The control unit 25 may collect sensing signals from the voltage measurement unit 22, the current measurement unit 23, and the temperature measurement unit 24 at regular time intervals while the battery module (Bₖ) is charging or discharging. The sensing signal includes a voltage signal, a current signal, and/or a temperature signal detected in a synchronized manner. The control unit 25 may convert the voltage signal and/or the current signal and/or the temperature signal into digital data, generate measurement data including at least one of the voltage, current, and temperature of the battery module (Bₖ), and cumulatively store it in the storage medium 26. Here, the voltage of the battery module (Bₖ) may be the sum of the voltages of the battery cells 21.

In one embodiment, the control unit 25 may determine the SOC (State Of Charge) of each battery cell 21 by integrating the current of each battery cell 21 using the Coulomb counting method, and determine an arithmetic average value, median value, or lowest value on the SOCs of each battery cell 21 as the SOC of the battery module (Bₖ).

The Coulomb counting method is a SOC determination method known in the art. In the Coulomb counting method, the voltage measured before the start of charging or discharging of the battery cell 21 may be determined as the OCV (Open Circuit Voltage), the SOC corresponding to the OCV may be looked up by referring to a predefined OCV-SOC lookup table, the looked-up SOC may be determined as an initial value, and if charging or discharging of the battery cell 21 begins, the SOC of the battery cell 21 may be determined in real time by adding the initial value of SOC and the charging capacity change rate according to current integration. The OCV-SOC lookup table may be recorded in advance in the storage medium 26.

In another embodiment, the control unit 25 may determine the SOC of each battery cell 21 by inputting the measurement data including at least one of the voltage, current, and temperature of each battery cell 21 into a recursive filter such as an extended Kalman filter known in the art, and determine an average value, median value, or minimum value of the SOCs of each battery cell 21 as the SOC of the battery module (Bₖ).

The present disclosure is not limited by the SOC determination method. Therefore, it is obvious that other SOC determination methods known in the art may be employed without limitation.

The control unit 25 may determine the SOC of the battery module (Bₖ) by the above-described method at regular time intervals and accumulate and record the SOC together with a time stamp in the storage medium 26.

Referring to FIG. 1 again, the master BMU (C_{M}) constitutes a node of a wireless mesh network together with the first to N^{th} BMUs (C₁ to C_{N}). From a hardware perspective, the master BMU (C_{M}) may have a similar configuration to the BMUs (C₁ to C_{N}) coupled to the battery modules (B₁ to B_{N}). In one example, the master BMU (C_{M}) may include the control unit 25, the storage medium 26, and the communication interface 27, as shown in FIG. 2. Optionally, the master BMU (C_{M}) may not include the voltage measurement unit 22, the current measurement unit 23 and the temperature measurement unit 24.

The master BMU (C_{M}) may collect measurement data including at least one of the voltage, current, and temperature of the first to N^{th} battery modules (B₁ to B_{N}) and/or operation characteristic data including SOC from the first to N^{th} BMUs (C₁ to C_{N}), and monitor and control the operation state of all battery modules.

In one example, if the SOC of a specific battery module is out of the operating range, the master BMU (C_{M}) may stop the operation of the corresponding battery module by transmitting a control message to the BMU coupled to the corresponding battery module through wireless communication.

Also, if a specific battery module is in an overcharge, overdischarge, or overcurrent state, the master BMU (C_{M}) may stop the operation of the corresponding battery module by sending a control message to the BMU coupled to the corresponding battery module through wireless communication.

In addition, the master BMU (C_{M}) may communicate with the control device of a device or system equipped with the battery pack BP and provide the operation characteristic data of the first to N^{th} battery modules (B₁ to B_{N}) to the control device.

Communication between the master BMU (C_{M}) and the control device may be accomplished through wireless or wired communication. The protocol of wireless communication may be substantially the same as the protocol used in the wireless mesh network. The protocol for wired communication may be the CAN (Controller Area Network) protocol. However, the present disclosure is not limited by the type of communication protocol.

Hereinafter, in the battery management system 10, the operations of the master BMU (C_{M}) and the first to N^{th} BMUs (C₁ to C_{N}) will be described in more detail. It should be noted that the operation of each BMU is an operation performed by the control unit.

The master BMU (C_{M}) forms a communication link along with the first to N^{th} BMUs (C₁ to C_{N}). The communication link may be formed according to procedures defined in a known standard protocol of short-range communication technology applied to the wireless mesh network.

The master BMU (C_{M}) may also determine the network performance of the first to N^{th} BMUs (C₁ to C_{N}). The network performance may be determined during the packet transmission and reception process. As a factor indicating the network performance, a received signal strength indicator (RSSI) or a bit error rate (BER) may be used. It is obvious to those skilled in the art that the network performance may be expressed by other factors known in the art. The methods for determining RSSI and BER are widely known in the art and thus will not described in detail here.

The master BMU (C_{M}) may also receive the measurement data including at least one of the voltage, current, and temperature of the battery module from the first to N^{th} BMUs (C₁ to C_{N}) at which a communication link is established and/or the operation characteristic data including the SOC of the battery module, and determine the SOC of the first to N^{th} battery modules (B₁ to B₆) by analyzing the operation characteristic data.

The master BMU (C_{M}) may also identify battery modules coupled with BMUs having network performance above the standard and having SOC satisfying the balancing condition. The BMU coupled to the identified battery module may be designated as the router BMU, and the remaining BMUs may be designated as the end BMUs. The balancing condition may be satisfied when the SOC is at the maximum, but the present disclosure is not limited thereto.

Here, when the factor representing the network performance is RSSI, the condition that the network performance is above the standard may be satisfied if the condition that RSSI is higher than or equal to a preset threshold is established. Also, when the factor representing the network performance is BER, the condition that the network performance is above the standard may be satisfied if the condition that BER is lower than or equal to a preset threshold is established.

The master BMU (C_{M}) also broadcasts the network address of the BMU designated as the router BMU to notify the first to N^{th} BMUs (C₁ to C_{N}) of the designation of the router BMU.

The router BMU forms a communication link together with each end BMU after broadcasting the network address. The router BMU may also be configured to collect the operation characteristic data including the SOC of the battery module from each end BMU and transmit the collected operation characteristic data and the operation characteristic data of the battery module coupled with the router BMU to the master BMU (C_{M}).

Since the router BMU plays a role of collecting the operation characteristic data from a plurality of end BMUs and transmitting it to the master BMU (C_{M}), its power consumption is relatively higher than that of the end BMU. Therefore, the SOC of the battery module coupled with the router BMU decreases relatively faster than the SOC of the battery module coupled with the end BMU, and balancing of the SOCs of the battery modules may be achieved.

According to another aspect of the present disclosure, the router BMU and the end BMUs may operate in a wake-up mode and a sleep mode in an alternate manner.

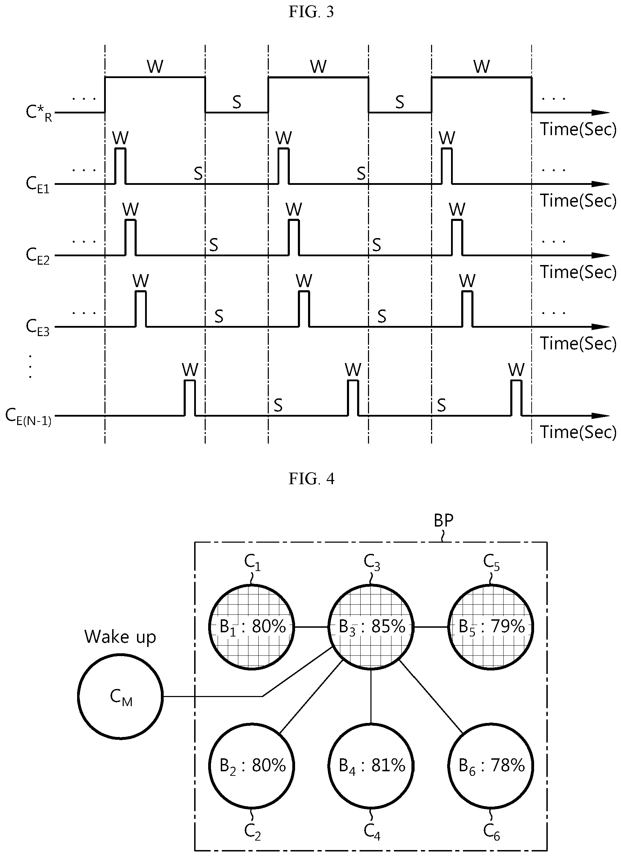

FIG. 3 is a diagram showing a router BMU (C*_{R}) and end BMUs (C_{E1} to C_{E(N-1)}) operating in a wake-up mode and a sleep mode in an alternating manner according to an embodiment of the present disclosure.

Referring to FIG. 3, the maintenance time of the wake-up mode W of the router BMUs (C*_{R}) is relatively longer than the maintenance time of the wake-up mode W of the end BMUs (C_{E1} to C_{E(N-1)}). Therefore, the power consumption of the router BMU (C*_{R}) is relatively higher than the power consumption of the end BMUs (C_{E1} to C_{E(N-1)}). Meanwhile, the maintenance time of the wake-up mode W of the end BMUs (C_{E1} to C_{E(N-1)}) may be substantially the same.

When the end BMUs (C_{E1} to C_{E(N-1)}) operate in the wake-up mode W, they generate operation characteristic data including the SOC of the battery module to which they belong and record the operation characteristic data in the storage medium.

While operating in the wake-up mode W, the router BMU (C*_{R}) forms a communication link with the end BMU operating in the wake-up mode W, and collects the operation characteristic data including the SOC of the battery module from each end BMU at which the communication link is formed. While the router BMU (C*_{R}) operates in the wake-up mode W, the end BMU operating in the sleep mode S cannot form a communication link with the router BMU (C*_{R}). Therefore, the router BMU (C*_{R}) does not collect the operation characteristic data of the battery module from the end BMU operating in the sleep mode S. In other words, the router BMU (C*_{R}) and the end BMUs (C_{E1} to C_{E(N-1)}) may form a communication link when the maintenance time of the wake-up mode W overlaps, and the router BMU (C*_{R}) may collect the operation characteristic data of the battery module from each end BMU at which the communication link is established and transmit the operation characteristic data to the master BMU (C_{M}).

The master BMU (C_{M}) may receive power from a separate power supply. When the charging or discharging of the battery pack BP is interrupted, the master BMU (C_{M}) does not need to monitor and control the operation of the first to N^{th} battery modules (B₁ to B_{N}), so the master BMU (C_{M}) may be switched to the sleep mode to reduce power consumption. For example, when the battery pack BP is mounted on an electric vehicle, the master BMU (C_{M}) may receive power from a separate battery. The master BMU (C_{M}) may switch to the sleep mode to reduce power consumption when the electric vehicle is keyed off.

When the master BMU (C_{M}) switches to the sleep mode, the communication link between the master BMU (C_{M}) and the other end BMUs (C_{E1} to C_{E(N-1)}) is released. When the master BMU (C_{M}) switches to the sleep mode and releases the communication link with the router BMU ( C*_{R}), the router BMU (C*_{R}) may hole the transmission of the characteristic data of the battery module collected from the end BMUs (C_{E1} to C_{E(N-1)}) to the master BMU (C_{M}), periodically collect the operation characteristic data of the battery module from the end BMUs (C_{E1} to C_{E(N-1)}), and cumulatively record the operation characteristic data in the storage medium.

If the master BMU (C_{M}) switches from the sleep mode to the wake-up mode and reestablishes a communication link with the router BMU (C*_{R}), the router BMU (C*_{R}) may transmit the latest operation characteristic data of the battery module recorded in the storage medium to the master BMU (C_{M}).

The master BMU (CM) may periodically repeat the control logics of forming a communication link with the first to N^{th} BMUs (C₁ to C_{N}), evaluating the network performance of each BMU, collecting operation characteristic data including the SOC of the battery module from each BMU, identifying a battery module coupled with a BMU having network performance above the standard are having SOC satisfying the balancing condition, designating the BMU coupled with the identified battery module as the router BMU, and designating the remaining BMUs as the end BMU.

Therefore, if the SOC of the battery module coupled with the router BMU is lower than at least one of the SOCs of other battery modules, another BMU connected to the battery module having the network performance above the standard and satisfying the balancing condition may be newly designated as the router BMU.

The newly designated router BMU may form a communication link with the end BMUs, collect operation characteristic data including the SOC of the battery module from each end BMU, and transmit the collected operation characteristic data and the operation characteristic data of the battery module coupled with the newly designated router BMU to the master BMU (C_{M}). In this process, the SOC of the battery module coupled with the newly designated router BMU is lowered relatively quickly, thereby allowing the SOCs between battery modules to be balanced.

Meanwhile, even while the master BMU (C_{M}) is in the sleep mode, the router BMU performs communication to collect operation characteristic data of the battery module from end BMUs while operating in the wake-up mode. Therefore, the SOC of the battery module coupled with the router BMU may continue to decrease and the balancing stop condition may be satisfied. The balancing stop condition may be satisfied when the SOC of the battery module coupled with the router BMU becomes lower than at least one of the SOCs of other battery modules. In this case, if the master BMU (C_{M}) operates in the wake-up mode, another BMU coupled with the battery module satisfying the balancing condition may be newly designated as the router BMU. However, while the master BMU (C_{M}) is in the sleep mode, it is impossible to change the router BMU.

The router BMU may periodically determine whether the SOC of the battery module to which the router BMU belongs satisfies the balancing stop condition while the master BMU (C_{M}) is switched to the sleep mode and releases the communication link with the router BMU.

If it is confirmed that the balancing stop condition is satisfied, the router BMU may perform a process to temporarily designate one of the end BMUs as a router BMU. First, the router BMU may form a communication link with the end BMUs and determine the network performance of the end BMUs. Also, the router BMU may determine the SOC of the battery modules coupled with the end BMUs by referring to the operation characteristic data of the battery modules collected from the end BMUs. In addition, the router BMU identifies a battery module coupled with a BMU having network performance above the standard and having SOC satisfying the balancing condition, and broadcasts the network address of the temporarily designated router BMU to notify the temporary designation of the router BMU to the end BMU. After the network address is broadcasted, the status of the previous router BMU changes to the end BMU.

After the network address is broadcasted, the temporarily designated router BMU forms a communication link with the end BMUs, collects the operation characteristic data of the battery module from each end BMU, and records the operation characteristic data in the storage medium.

The temporarily designated router BMU may also form a communication link with the master BMU (C_{M}) when the master BMU (C_{M}) switches from the sleep mode to the wake-up mode, and transmit the operation characteristic data of the battery module collected from each end BMU and the operation characteristic data of the battery module coupled therewith to the master BMU (C_{M}).

The master BMU (C_{M}) receives the operation characteristic data of all battery modules from the temporarily designated router BMU and then re-establishes a communication link with all BMUs after a certain period of time passes. Then, the master BMU (C_{M}) may determine the network performance of each BMU through transmission and reception of communication packets with all BMUs, identify a battery module coupled with the BMU having network performance above the standard and having SOC satisfying the balancing condition, newly designate the BMU coupled with the identified battery module as a router BMU, and designate the remaining BMUs as end BMUs.

The newly designated router BMU may form a communication link with the end BMUs as described above, collect operation characteristic data including the SOC of the battery module from the end BMUs, and transmit the collected operation characteristic data and the operation characteristic data of the battery module coupled therewith to the master BMU (C_{M}).

FIGS. 4 to 8 are diagrams for specifically explaining the method of operating a battery management system based on a wireless mesh network according to an embodiment of the present disclosure. The battery pack BP includes first to sixth battery modules (B₁ to B₆). The first to sixth BMUs (C₁ to C₆) may be correspondingly coupled with the first to sixth battery modules (B₁ to B₆). The battery pack BP is in a discharge state to supply power to the load.

In the drawings, a circle conceptually represents a BMU. The number in the circle represents the SOC of the battery module coupled with the BMU. Hatched circle represents a BMU having network performance above the standard.

The method of operating a battery management system according to the present disclosure includes a step of allowing a master BMU (C_{M}) and first to sixth BMUs (C₁ to C₆) to constitute a wireless mesh network. Preferably, the configuration of the wireless mesh network follows standard protocols known in the art.

In addition, the method of operating a battery management system according to the present disclosure may include a step of, by each of the first to sixth BMUs (C₁ to C₆), generating operation characteristic data including a SOC of the battery module managed thereby and recording the operation characteristic data in a storage medium.

The step of generation and recording operation characteristic data may be performed when the first to sixth BMUs (C₁ to C₆) operates in a wake-up mode.

Also, the method of operating a battery management system according to the present disclosure may include the step of, by the master BMU (C_{M}), forming a communication link with the first to sixth BMUs (C₁ to C₆).

Also, the method of operating a battery management system according to the present disclosure may include the step of, by the master BMU (C_{M}), determining network performance of the first to sixth BMUs (C₁ to C₆).

In addition, the method of operating a battery management system according to the present disclosure may include the step of, by the master BMU (C_{M}), receiving the operation characteristic data including the SOC of the battery module from the first to sixth BMUs (C₁ to C₆) and determining the SOC of the first to sixth battery modules (B₁ to B₆).

In addition, the method of operating a battery management system according to the present disclosure may include the step of, by the master BMU (C_{M}), identifying a battery module coupled with a BMU having network performance above the standard and having SOC satisfying a balancing condition, designating a BMU coupled with the identified battery module as a router BMU, and designating the remaining BMUs as end BMUs. Here, the balancing condition may be satisfied when the SOC is maximum.

In addition, the method of operating a battery management system according to the present disclosure may include the step of, by the router BMU, forming a communication link with each end BMU, and the step of, by the router BMU, collecting the operation characteristic data including the SOC of the battery module from each end BMU and transmitting the collected operation characteristic data and the operation characteristic data of the battery module coupled therewith to the master BMU.

Preferably, the router BMU and each end BMU may operate in a wake-up mode and a sleep mode in an alternate manner.

In this case, the method of operating a battery management system according to the present disclosure may include the step of switching an operation state of the router BMU to the wake-up mode, the step of, by the router BMU, scanning the end BMU operating in the wake-up mode to establish a communication link, the step of, by the router BMU, collecting operation characteristic data of the battery module from the end BMU at which the communication link is formed, and the step of, by the router BMU, transmitting the collected operation characteristic data and the operation characteristic data of the battery module coupled therewith to the master BMU.

Also, the method of operating a battery management system according to the present disclosure may include the step of maintaining the designation of the router BMU until the SOC of the battery module to which the router BMU belongs satisfies a balancing stop condition. Here, the balancing stop condition may be satisfied when the SOC of the battery module to which the router BMU belongs is lower than at least one of the SOCs of other battery modules.

In addition, the method of operating a battery management system according to the present disclosure may include the step of, by the router BMU, determining network performance when the SOC of the battery module coupled therewith satisfies a balancing stop condition, while the master BMU switches to a sleep mode and releases the communication link with the router BMU, and the step of, by the router BMU, identifying a battery module having network performance above the standard and having SOC satisfying the balancing condition and temporarily designating an end BMU coupled with the identified battery module as a router BMU.

In addition, the method of operating a battery management system according to the present disclosure may include the step of, by the temporarily designated router BMU, scanning an end BMU operating in the wake-up mode to form a communication link while operating in the wake-up mode and collecting operation characteristic data of the battery module from the end BMUs at which the communication link is formed, and the step of, by the temporarily designated router BMU, forming a communication link with the master BMU when the master BMU switches from the sleep mode to the wake-up mode and transmitting the operation characteristic data collected from each end BMU and the operation characteristic data of the battery module coupled therewith to the master BMU.

Meanwhile, it is obvious to those skilled in the art that any of the various operations and/or features of the master BMU, the router BMU, and the end BMU described with reference to FIGS. 1 to 3 may be included in the method of operating a battery management system as at least one or more steps and/or features.

Hereinafter, with reference to FIGS. 4 to 8, the method of operating a battery management system according to the present disclosure will be described in detail.

First, FIG. 4 exemplarily shows SOCs of battery modules (B₁ to B₆) and the network performance of BMUs (C₁ to C₆) at one time point while the battery pack BP is being discharged.

Referring to FIG. 4, the network performance of the first BMU (C₁), the third BMU (C₃), and the fifth BMU (C₅) respectively coupled to the first battery module (B₁), the third battery module (B₃), and the fifth battery module (B₅) is above the standard, and the SOC of the third battery module (B₃) is the highest as 85%.

The master BMU (C_{M}) may designate the third BMU (C₃) coupled with the third battery module (B₃) as the router BMU and designate the remaining BMUs (C₁, C₂, C₄, C₅, C₆) as end BMUs.

When the third BMU (C₃) designated as the router BMU operates in the wake-up mode, the third BMU (C₃) forms a communication link with the BMUs (C₁, C₂, C₄, C₅, C₆) operating in the wake-up mode. Also, the third BMU (C₃) may collect operation characteristic data of the battery modules (B₁, B₂, B₄, B₅, B₆) from the BMUs (C₁, C₂, C₄, C₅, C₆) and transmit the collected operation characteristic data and the operation characteristic data of the battery module (B₃) to the master BMU (C_{M}).

Since the third BMU (C₃) operates as a router BMU, its power consumption is higher than that of the BMUs (C₁, C₂, C₄, C₅, C₆). Therefore, SOC balancing is achieved as the SOC of the third battery module (B₃) decreases faster than the SOCs of the battery modules (B₁, B₂, B₄, B₅, B₆).

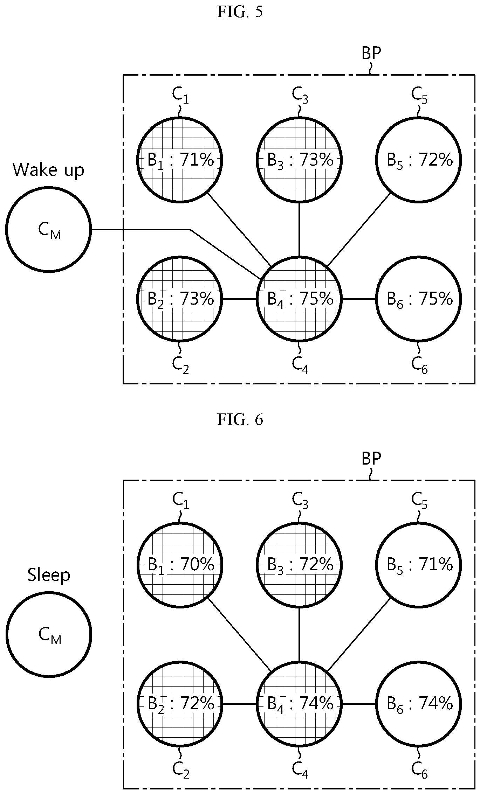

FIG. 5 exemplarily shows SOCs of battery modules (B₁ to B₆) and the network performance of BMUs (C₁ to C₆) at another time point while the battery pack BP is being discharged.

Referring to FIG. 5, the network performance of the first BMU (C₁), the second BMU (C₂), the third BMU (C₃), and the fourth BMU (C₄) respectively coupled with the first battery module (B₁), the second battery module (B₂), the third battery module (B₃), and the fourth battery module (B₄) is above the standard, and the SOC of the fourth battery module (B₄) is the highest as 75%.

The master BMU (C_{M}) may newly designate the fourth BMU (C₄) coupled with the fourth battery module (B₄) as the router BMU and designate the remaining BMUs (C₁, C₂, C₃, C₅, C₆) as end BMUs.

The fourth BMU (C₄) newly designated as the router BMU forms a communication link with the BMUs (C₁, C₂, C₃, C₅, C₆). Also, the fourth BMU (C₄) may collect the operation characteristic data of the battery modules (B₁, B₂, B₃, B₅, B₆) from the BMUs (C₁, C₂, C₃, C₅, C₆) and transmit the collected operation characteristic data and the operation characteristic data of the battery module (B₄) coupled therewith to the master BMU (C_{M}).

Since the fourth BMU (C₄) operates as a router BMU, its power consumption is higher than that of the BMUs (C₁, C₂, C₃, C₅, C₆). Therefore, SOC balancing is achieved as the SOC of the fourth battery module (B₄) decreases faster than the SOCs of the battery modules (B₁, B₂, B₃, B₅, B₆).

FIG. 6 exemplarily shows SOCs of the battery modules (B₁ to B₆) and the network performance of the BMUs (C₁ to C₆) at still another time point while the battery pack BP is being discharged.

Referring to FIG. 6, the master BMU (C_{M}) has switched from the wake-up mode to the sleep mode. Before the master BMU (C_{M}) switches to the sleep mode, the fourth BMU (C₄) was designated as the master BMU.

Even after the master BMU (C_{M}) switches to the sleep mode, the network performance of the first BMU (C₁), the second BMU (C₂), the third BMU (C₃), and the fourth BMU (C₄) respectively coupled with the first battery module (B₁), the second battery module (B₂), the third battery module (B₃), and the fourth battery module (B₄) is still above the standard, and the SOC of the fourth battery module (B₄) is also still the highest as 74%.

Therefore, the fourth BMU (C₄) forms a communication link with the BMUs (C₁, C₂, C₃, C₅, C₆) even if the master BMU (C_{M}) is in the sleep mode. Also, the fourth BMU (C₄) collects the operation characteristic data of the battery modules (B₁, B₂, B₃, B₅, B₆) from the BMUs (C₁, C₂, C₃, C₅, C₆) and record and maintain the operation characteristic data of the battery module (B₄) coupled therewith and the collected operation characteristic data in the storage medium 26.

Since the fourth BMU (C₄) operates as a router BMU, its power consumption is higher than that of the BMUs (C₁, C₂, C₃, C₅, C₆). Therefore, SOC balancing is achieved as the SOC of the fourth battery module (B₄) decreases faster than the SOCs of the battery modules (B₁, B₂, B₃, B₅, B₆).

Meanwhile, when the master BMU (C_{M}) switches from the sleep mode to the wake-up mode, the master BMU (C_{M}) may scan the router BMU through wireless communication to form a communication link with the fourth BMU (C₄), and receive and collect the operation characteristic data of all battery modules (B₁, B₂, B₃, B₄, B₅, B₆) recorded in the storage medium from the fourth BMU (C₄).

After a certain period of time, the master BMU (CM) may repeat the process of determining the network performance of the BMUs (C₁ to C₆), forming a communication link with the BMUs (C₁ to C₆), then collecting operation characteristic data including SOCs of the battery modules (B₁, B₂, B₃, B₄, B₅, B₆), and designating a router BMU and end BMUs with reference to the network performance of the BMUs (C₁ to C₆) and the SOCs of the battery modules (B₁, B₂, B₃, B₄, B₅, B₆).

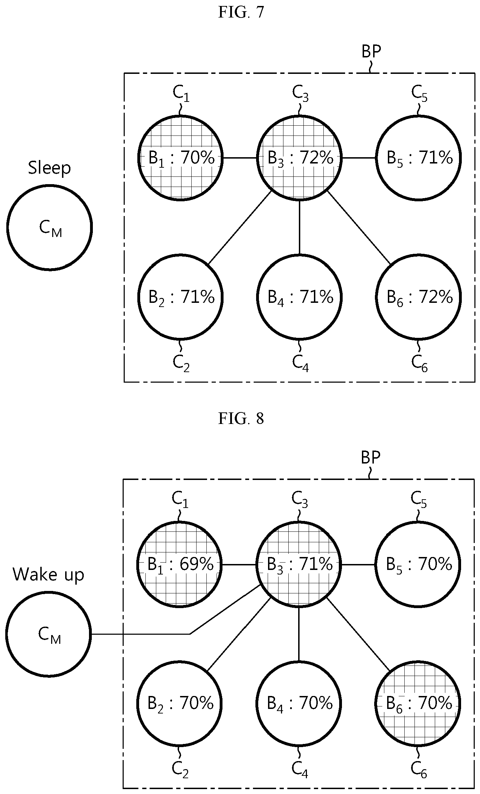

FIG. 7 exemplarily shows SOCs of the battery modules (B₁ to B₆) and the network performance of the BMUs (C₁ to C₆) at still another time point while the battery pack BP is being discharged.

Referring to FIG. 7, the master BMU (C_{M}) maintains the sleep mode state. Since the fourth BMU (C₄) operates as a router BMU, its power consumption is higher than that of the other BMUs (C₁, C₂, C₃, C₅, C₆). Accordingly, the SOC of the fourth battery module (B₄) is lowered to 71%, which is a level that does not require balancing. In other words, the SOC of the fourth battery module (B₄) is not greater than the SOCs of the battery modules (B₁, B₂, B₃, B₅, B₆), which satisfies the balancing stop condition. In this case, the fourth BMU (C₄) may perform the procedure of forming a communication link with the other BMUs (C₁, C₂, C₃, C₅, C₆), then determining network performance of the other BMUs (C₁, C₂, C₃, C₅, C₆), and designating the third BMU (C₃) coupled with the third battery module (B₃) having network performance above the standard and having SOC satisfying the balancing condition as a temporary router BMU.

The third BMU (C₃) temporarily designated as the router BMU forms a communication link with the BMUs (C₁, C₂, C₄, C₅, C₆). Also, the third BMU (C₃) may collect operation characteristic data of the battery modules (B₁, B₂, B₄, B₅, B₆) from the BMUs (C₁, C₂, C₄, C₅, C₆), and record and maintain the operation characteristic data of the battery module (B₃) coupled therewith and the collected operation characteristic data in the storage medium 26.

Since the third BMU (C₃) operates as a router BMU, its power consumption is higher than that of the BMUs (C₁, C₂, C₄, C₅, C₆). Therefore, even while the master BMU (C_{M}) is in the sleep mode, SOC balancing is achieved as the SOC of the third battery module (B₃) decreases faster than the SOCs of the battery modules (B₁, B₂, B₄, B₅, B₆).

FIG. 8 exemplarily shows SOCs of the battery modules (B₁ to B₆) and the network performance of the BMUs (C₁ to C₆) at still another time point while the battery pack BP is being discharged.

Referring to FIG. 8, the master BMU (C_{M}) switches from the sleep mode to the wake-up mode. The master BMU (C_{M}) may scan the router BMU through wireless communication to form a communication link with the third BMU (C₃), and receive and collect the operation characteristic data including the SOCs of the battery modules (B₁, B₂, B₃, B₄, B₅, B₆) from the third BMU (C₃).

Meanwhile, after the master BMU (C_{M}) switches to the wake-up mode, the network performance of the first BMU (C₁), the third BMU (C₃), and the sixth BMU (C₆) respectively coupled with the first battery module (B₁), the third battery module (B₃), and the sixth battery module (B₆) is still above the standard, and the SOC of the third battery module (B₃) is still the highest as 71%.

Therefore, the master BMU (C_{M}) may designate the third BMU (C₃) coupled with the third battery module (B₃) as the router BMU again and designate the remaining BMUs (C₁, C₂, C₄, C₅, C₆) as end BMUs.

The third BMU (C₃) re-designated as the router BMU forms a communication link with the BMUs (C₁, C₂, C₄, C₅, C₆). Also, the third BMU (C₃) collects the operation characteristic data of the battery modules (B₁, B₂, B₄, B₅, B₆) from the BMUs (C₁, C₂, C₄, C₅, C₆), and transmit the operation characteristic data of the battery module (B₃) coupled therewith and the collected operation characteristic data to the master BMU (C_{M}).

Since the third BMU (C₃) operates as a router BMU, its power consumption is higher than that of the BMUs (C₁, C₂, C₄, C₅, C₆). Therefore, SOC balancing is achieved as the SOC of the third battery module (B₃) decreases faster than the SOCs of the battery modules (B₁, B₂, B₄, B₅, B₆).

According to the above embodiments, the BMU coupled with a battery module having network performance above the standard and having SOC satisfying the balancing condition is designated as the router BMU, and the remaining BMUs are designated as end BMUs. Therefore, the energy of the battery module is consumed while the router BMU collects the operation characteristic data of the battery module from the end BMUs and transmitting it to the master BMU through wireless communication, so the SOCs of the battery modules may be balanced without unnecessary waste of energy.

Also, if the SOC of the battery module coupled with the router BMU satisfies the balancing stop condition while the master BMU is in the sleep mode, the router BMU is temporarily designated among the first to N^{th} BMUs, so the balancing of the SOC may be performed reliably without interruption regardless of the operation mode of the master BMU.

In the present disclosure, the control logics of the master BMU (C_{M}) and the first to N^{th} BMUs (C₁ to C_{N}) may be executed by the control unit 25 (FIG. 2) included in each BMU. The control unit 25 may optionally include a processor, an application-specific integrated circuit (ASIC), other chipsets, logic circuits, registers, communication modems, data processing devices, etc. known in the art to execute the various control logics described above.

Also, when the control logics are implemented as software, the control unit 25 may be replaced with a processor that executes a set of program modules. At this time, the program module may be stored in a memory and executed by the processor. The memory may be provided inside or outside the processor, and may be connected to the processor by various well-known computer components. Also, the memory may be included in the storage medium 26. Also, the memory generically refers to a device that stores information regardless of the type of device, and does not refer to a specific memory device.

In addition, one or more of the various control logics of the control unit 25 are combined, and the combined control logics may be written in a computer-readable code system and recorded on a computer-readable recording medium. The type of the recording medium is not particularly limited as long as it can be accessed by a processor included in a computer. As an example, the recording medium includes at least one selected from the group including a ROM, a RAM, a register, a CD-ROM, a magnetic tape, a hard disk, a floppy disk, and an optical data recording device. In addition, the code system may be distributed and stored and executed in computers connected through a network. In addition, functional programs, codes and code segments for implementing the combined control logics may be easily inferred by programmers in the art to which the present disclosure belongs.

In describing various embodiments of the present disclosure, elements named '... unit' or '... circuit' should be understood as functionally distinct elements rather than physically distinct elements. Thus, each component may be selectively integrated with other components or each component may be divided into sub-components for efficient execution of control logics. However, it is obvious to those skilled in the art that even if the components are integrated or divided, if the same function can be recognized, the integrated or divided components should also be interpreted as falling within the scope of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Additionally, as many substitutions, modifications and changes may be made to the present disclosure described hereinabove by those skilled in the art without departing from the technical aspects of the present disclosure, the present disclosure is not limited by the above-described embodiments and the accompanying drawings, and all or some of the embodiments may be selectively combined to allow various modifications.

## Claims

1. A battery management system based on a wireless mesh network, comprising:
first to N^{th} BMUs (Battery Management Unit) and a master BMU that constitute a wireless mesh network,
wherein each of the first to N^{th} BMUs and the master BMU includes a communication interface for supporting wireless communication through the wireless mesh network and a storage medium capable of storing data,
wherein the first to N^{th} BMUs are correspondingly coupled with first to N^{th} battery modules and record operation characteristic data including a SOC (State Of Charge) of a battery module managed thereby in the storage medium,
wherein the master BMU is configured to:
form a communication link with the first to N^{th} BMUs,
determine network performance of the first to N^{th} BMUs,
determine SOCs of the first to N^{th} battery modules by receiving the operation characteristic data from the first to N^{th} BMUs, and
designate a BMU coupled with a battery module having network performance above the standard and having a SOC satisfying a balancing condition as a router BMU and designate the remaining BMUs as end BMUs among the first to N^{th} BMUs,
wherein the router BMU is configured to:
form a communication link with each end BMU, and
collect the operation characteristic data of the battery module from each end BMU and transmit the collected operation characteristic data and the operation characteristic data of the battery module coupled with the router BMU to the master BMU.

2. The battery management system based on a wireless mesh network according to claim 1,
wherein a SOC reduction rate of the battery module coupled with the router BMU is faster than a SOC reduction rate of the battery module coupled with each end BMU.

3. The battery management system based on a wireless mesh network according to claim 1,
wherein the network performance is a received signal strength indicator (RSSI) or a bit error rate (BER).

4. The battery management system based on a wireless mesh network according to claim 1,
wherein the master BMU is configured to designate a BMU coupled to a battery module with a highest SOC among the BMUs having network performance above the standard as a router BMU.

5. The battery management system based on a wireless mesh network according to claim 1,
wherein the router BMU and each end BMU operate in a wake-up mode and a sleep mode in an alternate manner, and
wherein a maintenance time of the wake-up mode of the router BMU is relatively longer than a maintenance time of the wake-up mode of each end BMU.

6. The battery management system based on a wireless mesh network according to claim 5,
wherein each end BMU generates operation characteristic data of the battery module connected with the corresponding end BMU when operating in the wake-up mode, and
wherein the router BMU is configured to form a communication link with an end BMU operating in the wake-up mode while operating in the wake-up mode, and collect the operation characteristic data of the battery module from each end BMU at which the communication link is formed.

7. The battery management system based on a wireless mesh network according to claim 1,
wherein the router BMU is configured to transmit the operation characteristic data collected from each end BMU and the operation characteristic data of the battery module coupled with the router BMU to the master BMU when the master BMU is operating in a wake-up mode.

8. The battery management system based on a wireless mesh network according to claim 1,
wherein the router BMU is configured to hold the transmission of the operation characteristic data collected from each end BMU to the master BMU when the master BMU switches to a sleep mode and releases a communication link with the router BMU, additionally collect operation characteristic data from each end BMU, and maintain the additionally collected operation characteristic data in the storage medium.

9. The battery management system based on a wireless mesh network according to claim 8,
wherein the router BMU is configured to transmit the collected operation characteristic data and the operation characteristic data of the battery module coupled with the router BMU to the master BMU when the master BMU switches from the sleep mode to a wake-up mode and reestablishes a communication link.

10. The battery management system based on a wireless mesh network according to claim 1,
wherein the router BMU is configured to:
determine network performance by forming a communication link with the remaining end BMUs when the SOC of the battery module coupled with the router BMU does not satisfy the balancing condition, while the master BMU switches to a sleep mode and releases the communication link with the router BMU, and
temporarily designate an end BMU coupled with a battery module having network performance above the standard and having a SOC satisfying the balancing condition as a router BMU among the remaining end BMUs.

11. The battery management system based on a wireless mesh network according to claim 10,
wherein the router BMU is configured to determine that the balancing condition is not satisfied when the SOC of the battery module coupled with the router BMU is less than at least one of the SOCs of the battery modules coupled with the end BMUs.

12. The battery management system based on a wireless mesh network according to claim 10,
wherein the temporarily designated router BMU is configured to form a communication link with an end BMU operating in a wake-up mode while the master BMU is in the sleep mode, collect operation characteristic data of the battery module from the end BMU at which the communication link is formed, and store the collected operation characteristic data in the storage medium.

13. The battery management system based on a wireless mesh network according to claim 12,
wherein the temporarily designated router BMU is configured to:
form a communication link with the master BMU when the master BMU switches from the sleep mode to the wake-up mode, and
transmit the operation characteristic data of the battery module collected from each end BMU and the operation characteristic data of the battery module coupled with the temporarily designated router BMU to the master BMU.

14. A method of operating a battery management system based on a wireless mesh network, comprising:
(a) allowing first to N^{th} BMUs correspondingly coupled with first to N^{th} battery management modules and a master BMU to constitute a wireless mesh network;
(b) by each of the first to N^{th} BMUs, generating and storing characteristic data including a SOC of a battery module managed thereby;
(c) by the master BMU, forming a communication link with the first to N^{th} BMUs;
(d) by the master BMU, determining network performance of the first to N^{th} BMUs;
(e) by the master BMU, determining SOCs of the first to N^{th} battery modules by receiving the operation characteristic data from the first to N^{th} BMUs;
(f) by the master BMU, designating a BMU coupled with a battery module having network performance above the standard and having a SOC satisfying a balancing condition as a router BMU and designating the remaining BMUs as end BMUs among the first to N^{th} BMUs;
(g) by the router BMU, forming a communication link with each end BMU;
(h) by the router BMU, collecting the operation characteristic data of the battery module from each end BMU and transmitting the collected operation characteristic data and the operation characteristic data of the battery module coupled with the router BMU to the master BMU; and
(i) by the master BMU, maintaining the designation of the router BMU until the SOC of the battery module to which the router BMU belongs satisfies a balancing stop condition.

15. The method of operating a battery management system based on a wireless mesh network according to claim 14,
wherein a SOC reduction rate of the battery module coupled with the router BMU is faster than a SOC reduction rate of the battery module coupled with each end BMU.

16. The method of operating a battery management system based on a wireless mesh network according to claim 14,
wherein the network performance is a RSSI or a BER.

17. The method of operating a battery management system based on a wireless mesh network according to claim 14,
wherein the router BMU and each end BMU operate in a wake-up mode and a sleep mode in an alternate manner, and
wherein the (h) step includes:
switching an operation state of the router BMU to the wake-up mode; and
by the router BMU, forming a communication link with an end BMU operating in the wake-up mode, collecting the operation characteristic data of the battery module from each end BMU at which the communication link is formed, and transmitting the collected operation characteristic data and the operation characteristic data of the battery module coupled with the router BMU to the master BMU.

18. The method of operating a battery management system based on a wireless mesh network according to claim 17,
wherein a maintenance time of the wake-up mode of the master BMU is longer than a maintenance time of the wake-up mode of the end BMU.

19. The method of operating a battery management system based on a wireless mesh network according to claim 14, further comprising:
by the router BMU, forming a communication link with the remaining end BMUs and determining network performance when the SOC of the battery module coupled with the router BMU satisfies a balancing stop condition while the master BMU switches to a sleep mode and releases the communication link with the router BMU; and
by the router BMU, temporarily designating an end BMU coupled with a battery module having network performance above the standard and having SOC satisfying the balancing condition as a router BMU among the remaining end BMUs.

20. The method of operating a battery management system based on a wireless mesh network according to claim 19, further comprising:
by the temporarily designated router BMU, forming a communication link with an end BMU operating in a wake-up mode while operating in a wake-up mode, and collecting operation characteristic data of the battery module from the end BMU at which the communication link is formed; and
by the temporarily designated router BMU, forming a communication link with the master BMU when the master BMU switches from the sleep mode to the wake-up mode, and transmitting the operation characteristic data collected from each end BMU and the operation characteristic data of the battery module coupled with the temporarily designated router BMU to the master BMU.
